(19) Europäisches Patentamt
European Patent Office
Office européen des brevets

(11) **EP 1 885 900 B1**

(12) **FASCICULE DE BREVET EUROPEEN**

(45) Date de publication et mention
de la délivrance du brevet:
**26.07.2017 Bulletin 2017/30**

(21) Numéro de dépôt: **06764647.1**

(22) Date de dépôt: **19.05.2006**

(51) Int Cl.:
*C22C 38/00* (2006.01)　　*C22C 38/02* (2006.01)
*C22C 38/08* (2006.01)　　*C22C 38/12* (2006.01)

(86) Numéro de dépôt international:
**PCT/FR2006/001150**

(87) Numéro de publication internationale:
**WO 2006/125899 (30.11.2006 Gazette 2006/48)**

(54) **ACIER POUR COQUES DE SOUS-MARINS A SOUDABILITE RENFORCEE**

STAHL FÜR UNTERSEEBOOTHÜLLEN MIT VERBESSERTER SCHWEISSBARKEIT

STEEL FOR SUBMARINE HULLS WITH IMPROVED WELDABILITY

(84) Etats contractants désignés:
**AT BE BG CH CY CZ DE DK EE ES FI FR GB GR
HU IE IS IT LI LT LU LV MC NL PL PT RO SE SI
SK TR**
Etats d'extension désignés:
**AL BA HR MK YU**

(30) Priorité: **26.05.2005　FR 0505333**

(43) Date de publication de la demande:
**13.02.2008　Bulletin 2008/07**

(73) Titulaire: **INDUSTEEL (FRANCE)
92800 Puteaux (FR)**

(72) Inventeurs:
• **BEGUINOT, Jean
F-71200 Le Creusot (FR)**
• **CHAUVY, Cédric
F-71670 Saint Firmin (FR)**

(74) Mandataire: **Lavoix
2, place d'Estienne d'Orves
75441 Paris Cedex 09 (FR)**

(56) Documents cités:
**EP-A- 0 867 520　　WO-A-02/12581
WO-A-93/24269　　FR-A- 2 307 879**

• **PATENT ABSTRACTS OF JAPAN vol. 2000, no.
20, 10 juillet 2001 (2001-07-10) -& JP 2001 071176
A (SUMITOMO METAL IND LTD), 21 mars 2001
(2001-03-21)**
• **PATENT ABSTRACTS OF JAPAN vol. 2000, no.
22, 9 mars 2001 (2001-03-09) -& JP 2001 123245
A (NIPPON STEEL CORP), 8 mai 2001
(2001-05-08)**
• **PATENT ABSTRACTS OF JAPAN vol. 2000, no.
08, 6 octobre 2000 (2000-10-06) -& JP 2000 129392
A (NIPPON STEEL CORP), 9 mai 2000
(2000-05-09)**

**Description**

La présente invention est relative à un acier pour la fabrication de coques de sous-marins constituées de pièces en acier laminé ou forgé assemblées par soudage.

Afin de pouvoir plonger en eau profonde sans alourdir excessivement le bâtiment, les coques de sous-marins sont constituées en général de tôles en acier d'épaisseur comprise entre 40 et 50 mm, et éventuellement de pièces forgées d'épaisseur comprise entre 100 et 150 mm, constituées d'un acier à très haute élasticité, ayant une très bonne ténacité y compris à basse température de façon à assurer une bonne sécurité même en cas de sollicitation dynamique intense, et relativement bien soudable de façon à permettre de réaliser des assemblages de bonne qualité.

Les aciers utilisés habituellement sont des aciers de la gamme dite de 60 ou 80 HLES, dont la composition chimique comprend environ 0,10% de carbone, de 2 à 4% de nickel, de 0,2 à 0,4% de silicium, du molybdène et du vanadium en des teneurs telles que Mo + 3 V soit compris entre 0,3 et 0,5%, entre 0,8 et 1,2% de Mn, entre 0,1 et 0,5% de Cr, le reste étant du fer, des impuretés, et éventuellement des éléments désoxydants en faible quantité. Ces aciers sont utilisés pour fabriquer des pièces telles que des tôles ou des pièces forgées, qui sont trempées et revenues de façon à avoir une structure globalement martensitique revenue, c'est-à-dire contenant plus de 90% de martensite, et dont la limite d'élasticité est comprise entre 550 et 650 MPa, la résistance à la traction est comprise entre 600 et 750 MPa, l'allongement à rupture est compris entre 15 et 20%, la résilience Charpy $K_{cv}$ est supérieure à 80 J à -80°C.

Les pièces réalisées en ces aciers sont assemblées par soudage avec un préchauffage à une température de l'ordre de 150°C au moins de façon à éviter des problèmes de fissuration à froid.

Ces conditions de soudage sont nécessaires en particulier parce que les soudures réalisées sont des soudures très fortement bridées, pouvant engendrer des contraintes proches de 80% de la limite d'élasticité, et parce que les soudures sont réalisées sur des chantiers dans lesquels la température peut descendre au voisinage de 0°C.

La nécessité de réaliser un préchauffage à une température élevée est un inconvénient qui rend difficile le soudage des pièces de coques de sous-marins. Aussi, il est souhaitable de pouvoir disposer d'un acier qui permette de réaliser des soudures dans des conditions moins sévères, c'est-à-dire sans préchauffage ou, au moins, en ne pratiquant qu'un dégourdissage des tôles ne dépassant pas 100°C ou mieux 50°C et ce, malgré des bridages très élevés des soudures et malgré des températures extérieures du chantier relativement basses.

On a proposé notamment dans la demande de brevet WO93/24269, d'améliorer les conditions de soudage des coques de bateau réalisées en acier du type 60 ou 80 HLES, en utilisant des électrodes de soudage différentes des électrodes définies par les normes de construction qui s'imposent dans ce domaine, ces électrodes de soudage conduisant à des structures bainitique bas-carbone (LCBS en anglais).

Mais cette technique présente des inconvénients parce que la réduction du risque de fissuration ainsi obtenu au niveau du métal déposé ne résout pas pour autant le problème du risque de fissuration induit par l'opération de soudage dans le métal de base lui-même, au niveau de la Zone Affectée Thermiquement.

Le but de la présente invention est de remédier à ces inconvénients en proposant un acier à haute limite d'élasticité soudable pour la fabrication de coques de sous-marins par assemblage par soudage de pièces constituées de tôles épaisses ou de pièces forgées, qui ont une limite d'élasticité comprise entre 480 et 620 MPa, une ténacité mesurée par une ténacité Charpy V $K_v$ supérieure à 50J à -60°C, préférentiellement supérieure à 50J à -85°C, et pour lesquels les risques de fissurations induites par une opération de soudage, dans le métal de base, au niveau de la Zone Affectée Thermiquement, sont réduits.

A cet effet, l'invention a pour objet l'utilisation d'un acier pour la fabrication de coques de sous-marins, caractérisé en ce que sa composition chimique comprend, en % en poids :

$$0,030\% \leq C < 0,080\%$$

$$0,040\% \leq Si \leq 0,48\%$$

$$0,1\% \leq Mn \leq 1,4\%$$

$$2\% \leq Ni \leq 4\%$$

$$Cr \leq 0,3\%$$

$$0,30\% \leq \text{Mo} + \text{W/2} + 3\,(\text{V} + \text{Nb/2} + \text{Ta/4}) \leq 0,89\%$$

$$\text{Mo} \geq 0,15\%$$

$$\text{V} + \text{Nb/2} + \text{Ta/4} \leq 0,004\%$$

$$\text{Nb} \leq 0,004\%$$

$$\text{Cu} \leq 0,45\%$$

$$\text{Al} \leq 0,1\%$$

$$\text{Ti} \leq 0,04\%$$

$$\text{N} \leq 0,0300\%$$

le reste étant du fer et des impuretés résultant de l'élaboration, le bore étant une impureté dont la teneur est inférieure à 0,0005%, et P + S ≤ 0,015%, la composition chimique satisfaisant la condition,

$$410 \leq 540 \times C^{0,25} + 245\,[\,\text{Mo} + \text{W/2} + 3\,(\text{V} + \text{Nb/2} + \text{Ta/4})]^{0,30} \leq 460$$

l'acier ayant une structure essentiellement martensitique ou bainitique inférieure ou constituée essentiellement d'un mélange de ces deux structures, comprenant au moins 90% de martensite ou de bainite inférieure ou d'un mélange de ces deux structures, au plus 5% d'austénite résiduelle, au plus 5% de ferrite, avec une limite d'élasticité comprise entre 480 MPa et 620 MPa, et une ténacité Charpy V, $K_{cv}$, à -60°C, supérieure à 50 J.

De préférence, la composition chimique est telle que une ou plusieurs des conditions suivantes soit satisfaite :

$$\text{Si} \leq 0,19\%$$

$$\text{Mn} \leq 1\%$$

$$\text{W} \geq 0,11\%$$

$$2,5\% \leq \text{Ni} \leq 3,5\%$$

$$\text{Cr} \leq 0,2\% \text{ et mieux Cr} \leq 0,09\%$$

$$425 \leq 540 \times C^{0,25} + 245\,[\,\text{Mo} + \text{W/2} + 3\,(\text{V} + \text{Nb/2} + \text{Ta/4})]^{0,30} \leq 450$$

$$Ni \geq 2,7\%$$

$$Mo \leq 0,75\%$$

$$C \leq 0,55\%$$

L'invention concerne également une pièce de coque de sous-marin, d'épaisseur comprise entre 15 mm et 150 mm, en acier forgé ou laminé, trempé et revenu, selon l'invention, ainsi qu'une coque de sous-marin comprenant des pièces selon l'invention, assemblées par soudage.

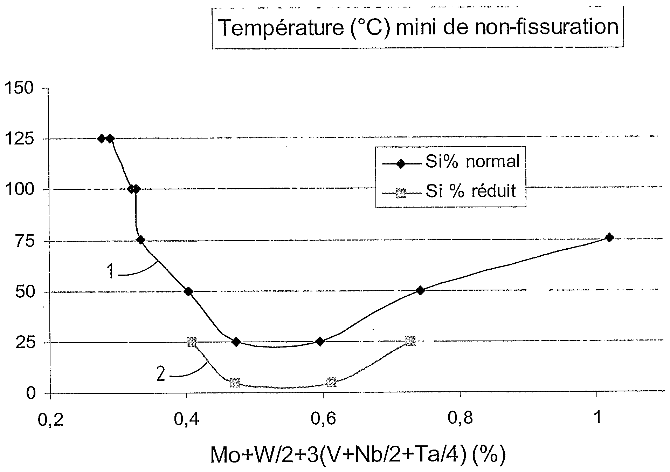

L'invention concerne enfin, l'utilisation de l'acier selon l'invention pour la fabrication d'une coque de sous-marin comprenant des pièces d'épaisseur comprises entre 15 mm et 150 mm, assemblées par soudage, le soudage pouvant être effectué sur des pièces non préchauffées ou préchauffées à une température ne dépassant pas 25°C, aussi que un acier pour la fabrication de coques de sous-marins selon la revendication 16. L'invention va maintenant être décrite de façon plus précise mais non limitative en regard de la figure unique qui représente l'évolution de la température minimale de non-fissuration au soudage en fonction de la teneur en élément carburigène fort, et illustrée par des exemples.

Les inventeurs ont constaté de façon nouvelle et inattendue qu'on pouvait réaliser des pièces pour les coques de sous-marins ayant des caractéristiques conformes aux caractéristiques généralement requises pour réaliser des sous-marins, plus facilement soudable que les pièces pour sous-marins réalisées en acier connu. Pour cela, il fallait utiliser un acier dont la composition avait été modifiée par rapport à celle des aciers connus, d'une part en abaissant sensiblement les teneurs en carbone et d'autre part en augmentant les teneurs en éléments carburigènes forts, c'est-à-dire en éléments capables de précipiter sous forme de carbures fins et dispersés durcissants mais non fragilisants, cet acier devant avoir une structure essentiellement martensitique, c'est-à-dire comprenant plus de 90% de martensite, le reste étant constitué de moins de 5% d'austénite résiduelle et de moins de 5% de ferrite. Toutefois il a été constaté que la composante martensitique pouvait, sans détérioration excessive de la ténacité, être substituée pour tout ou partie par de la bainite de type inférieure, c'est à dire de la bainite en lattes, d'aspect micrographique à cet égard semblable à la martensite.

La composition chimique de l'acier ainsi modifié comprend en %, en poids :

- plus de 0,03% de carbone et de préférence plus de 0,035%, mais moins de 0,080% et de préférence moins de 0,060% et mieux encore moins de 0,055%, afin de permettre d'une part la formation de carbures durcissants lors du revenu sans toutefois que cela détériore la ténacité du métal de base et surtout la ténacité dans la zone affectée par la chaleur lors du soudage ; la teneur en carbone étant limitée notamment afin de réduire les déformations liées à la transformation martensitique dans la zone affectée par la température dans la zone de soudage, ce qui est nécessaire pour limiter les effets du bridage et donc réduire la sensibilité du métal à la fissuration lors du soudage.
- de 0,04% à 0,48% de silicium afin de désoxyder le bain d'acier liquide. Cependant, et de préférence, la teneur en silicium sera réduite et restera inférieure à 0,29%, mieux, inférieure à 0,25%, et mieux encore, inférieure à 0,19%, de façon à améliorer la conductivité thermique de l'acier, ce qui aura pour effet de réduire les gradients thermiques lors du soudage et ainsi réduire les contraintes mécaniques qui en résultent, ce qui réduit la sensibilité de l'acier à la fissuration lors de la réalisation de soudures bridées.
- jusqu'à 1,4% de manganèse de façon à améliorer la trempabilité sans toutefois former des bandes ségrégées trop importantes. L'acier contenant par ailleurs d'autres éléments trempants, le manganèse n'est pas strictement indispensable et sa teneur peut être limitée à 1,2% et mieux encore à 1,0% ; il peut également être à l'état de traces. Cependant, notamment afin de faciliter l'élaboration de l'acier, la teneur en manganèse sera de préférence au moins égale à 0,2% voire 0,6%.
- au moins 2,1% et mieux 2,5% et mieux encore 2,7% de nickel afin d'améliorer la trempabilité, ce qui est nécessaire pour assurer l'obtention du type de microstructure souhaité à savoir une structure constituée essentiellement de martensite ou de bainite inférieure ou d'un mélange de ces deux structures. La teneur en nickel peut atteindre 5% mais en pratique et compte tenu du coût de cet élément, la teneur sera de préférence inférieure à 4% et mieux encore inférieure à 3,5%.
- moins de 0,3% et mieux moins de 0,15% et mieux encore moins de 0,09% de chrome. Cet élément carburigène n'est pas souhaité. En effet, il est susceptible de former des carbures assez massifs qui n'ont pas d'effet particulièrement favorable sur les propriétés de l'acier selon l'invention. De ce fait, si il était en quantité trop élevée, il consommerait du carbone qui ne serait alors plus disponible pour former des carbures durcissants avec d'autres éléments carburigènes forts formant des carbures durcissants, fins et dispersés. Le chrome est donc considéré comme un résiduel résultant de l'élaboration. Le respect de la contrainte relative à la teneur en cet élément impose d'élaborer l'acier à partir de matières premières choisies avec précaution. Ces précautions sont plus particulièrement importantes lorsque les matières premières sont constituées principalement de ferrailles, ce qui est le cas général pour ce type d'acier.

- des éléments carburigènes forts qui forment des carbures précipités fins et durcissants. Ces éléments sont le molybdène et le tungstène d'une part, le vanadium, le niobium et le tantale d'autre part. Pour ces éléments, la somme pondérée [Mo + W/2 + 3 (V + Nb/2 + Ta/4)] devra être d'au moins 0,30%, et mieux de 0,35% et mieux encore de 0,4%. Cette somme ne devra pas être trop élevée pour limiter les conséquences défavorables sur la ténacité et l'homogénéité du métal, ce qui résulterait de teneurs au-delà de ce qui est nécessaire au durcissement souhaité. De ce fait, la somme pondérée d'élément carburigène fort restera inférieure à 0,89% et mieux inférieure à 0,69% et mieux encore inférieure à 0,59%. Par ailleurs, le molybdène et le tungstène sont préférables car le vanadium, le niobium et le tantale présentent un effet fragilisant notable. Aussi, la somme pondérée V + Nb/2 + Ta/4 restera inférieure à 0,004%, le niobium étant plus nocif pour la ténacité que le vanadium, sa teneur sera limitée à 0,004%, et de préférence, les éléments vanadium, niobium et tantale seront à l'état de traces. En revanche la teneur en molybdène sera au minimum de 0,15% et mieux encore de 0,30% et mieux encore de 0,45%. Le molybdène peut être préféré au tungstène car il est d'usage plus courant et ordinairement plus économique que le tungstène. Cependant le tungstène présente l'avantage de réduire la formation de zones ségrégées ayant des effets défavorables sur la ténacité du métal, ainsi il sera, malgré tout, préférable d'avoir une teneur en tungstène supérieure à 0,11%.

- moins de 0,45% et mieux, moins de 0,25% de cuivre afin de ne pas détériorer la forgeabilité et de favoriser l'aptitude au formage ultérieur des tôles.

- jusqu'à 0,10% d'aluminium et de préférence moins de 0,040%, mais de préférence plus de 0,004% et mieux plus de 0,010%, afin de désoxyder l'acier et de former des nitrures d'aluminium qui permettent de contrôler le grossissement du grain lors du traitement thermique.

- préférentiellement la teneur en azote sera comprise entre 0,0010% et 0,0150% afin de faciliter la formation de nitrures d'aluminium permettant de contrôler le grossissement du grain ; la teneur en azote peut dépasser 0,0150%, toutefois, il est souhaitable que cette teneur ne dépasse pas 0,0300% et mieux, ne dépasse pas 0,0200% afin de ne pas nuire à l'aptitude au formage à froid ou à tiède des produits.

- éventuellement jusqu'à 0,04% de titane, élément qui a un effet comparable à celui de l'aluminium. Toutefois, le titane ayant tendance à former des précipités très fragilisants, il est préférable de limiter la teneur en cet élément à des traces.

Le reste de la composition est constitué de fer et d'impuretés résultant de l'élaboration. Parmi ces impuretés, le bore doit rester à l'état de traces c'est-à-dire en des teneurs inférieures à 0,0005%. Ceci afin d'éviter l'effet fragilisant qu'exerce cet élément et ses composés sous forme de nitrures ou carbures. Bien que le Bore soit un élément couramment utilisé pour renforcer la trempabilité des aciers à haute limite d'élasticité, le très haut niveau de résilience recherché ici conduit à éviter d'utiliser la contribution du Bore.

Egalement, parmi les impuretés, le phosphore et le soufre doivent être limités à des teneurs telles que la somme P + S reste inférieure à 0,015% et de préférence inférieure à 0,012% et mieux encore inférieure ou égale à 0,009% afin de ne pas détériorer la ténacité de l'acier. Cette contrainte nécessite que l'acier soit élaboré en prenant des précautions particulières contraignantes. Aujourd'hui, l'homme du métier, qui doit respecter ces contraintes, sait comment procéder.

En outre, afin de permettre d'obtenir les caractéristiques mécaniques suffisantes et notamment la limite d'élasticité et la résistance, la composition chimique de l'acier doit être telle que la grandeur

$$R = 540 \times C^{0,25} + 245 \, [Mo + W/2 + 3(V + Nb/2 + Ta/4)]^{0,30}$$

soit comprise entre 410 et 460 et de préférence entre 425 et 450.

Pour fabriquer des tôles ou des pièces destinées à la fabrication de sous-marins, on peut procéder comme indiqué ci-dessous.

Tout d'abord, on élabore l'acier de façon connue, par exemple au four électrique en prenant toute les précautions nécessaires que l'homme du métier connaît pour respecter les contraintes de pureté de l'acier indiquées ci-dessus, puis on coule l'acier sous forme de lingots ou de brames selon la nature des pièces que l'on veut réaliser. Puis on met en forme par déformation plastique à chaud, c'est-à-dire par laminage ou par forgeage, les lingots ou les brames en les réchauffant à une température telle que le début de la transformation à chaud se fasse à une température supérieure à 1000°C et mieux supérieure à 1050°C et mieux encore supérieure à 1100°C, afin de limiter les défauts de surface. Mais, préférentiellement, la température de réchauffage doit rester inférieure à 1260°C et, mieux, inférieure à 1220°C, afin notamment de limiter le grossissement excessif du grain à ce stade. Après l'opération de mise en forme par déformation plastique à chaud, les pièces obtenues sont soumises à un traitement thermique de qualité comportant une opération de trempe soit à partir de la chaude de formage, soit, préférentiellement, après réausténitisation à une température au moins égale à AC3 et habituellement comprise entre 860 et 950°C environ. Le refroidissement peut être réalisé selon tous moyens de trempe connus tels que air, huile ou eau, selon la massivité des pièces considérées, afin d'obtenir après trempe une microstructure essentiellement martensitique. L'homme du métier sait choisir, au cas par cas, le moyen de trempe le mieux adapté.

La trempe est suivie d'au moins un revenu réalisé de préférence à une température comprise entre 550°C et 670°C.

Par ce procédé, on peut obtenir des tôles ou des pièces forgées dont les caractéristiques mécaniques dans toute l'épaisseur sont conformes à ce qui est recherché pour la fabrication de sous-marins, à savoir, une limite d'élasticité comprise entre 480 MPa et 620 MPa et de préférence entre 500 MPa et 600 MPa, et une ténacité charpy $K_{CV}$ à -60°C supérieure à 50 J.

L'effet de la composition chimique sur l'aptitude au soudage est illustré par les exemples dont les analyses sont reportées aux tableaux 1 et 2. Pour les exemples des tableaux, le niobium, le tantale et le titane sont à l'état de traces de sorte que les valeurs de Mo + W/2 + 3V, indiquées dans le tableau, sont égales aux quantités Mo + 3 (V + Nb/2 + Ta/4); le bore est à l'état de trace avec une teneur inférieure à 0,0005%; l'aluminium est compris entre 0,015% et 0,025%. Dans le tableau 1, la somme P + S est exprimée en $10^{-3}$%. Dans le tableau 2, la somme P + S reste inférieure à 0,015%.

Les exemples 1 et 2 sont selon l'art antérieur, et les exemples 3 à 9 et 6bis à 9bis sont conformes à l'invention. L'exemple 10 est donné à titre de comparaison.

Tableau 1

| n° | C | Si | Mn | Ni | Cr | Mo |
|----|----|----|----|----|----|----|
| 1 | 0,092 | 0,300 | 0,550 | 3,000 | 0,060 | 0,270 |
| 2 | 0,083 | 0,400 | 0,800 | 3,000 | 0,070 | 0,160 |
| 3 | 0,069 | 0,320 | 0,900 | 3,200 | 0,080 | 0,320 |
| 4 | 0,062 | 0,350 | 0,920 | 3,100 | 0,090 | 0,320 |
| 5 | 0,055 | 0,320 | 0,510 | 3,250 | 0,130 | 0,210 |
| 6 | 0,049 | 0,280 | 0,920 | 3,300 | 0,095 | 0,395 |
| 7 | 0,043 | 0,300 | 0,580 | 2,950 | 0,085 | 0,470 |
| 8 | 0,035 | 0,290 | 0,980 | 3,100 | 0,095 | 0,590 |
| 9 | 0,030 | 0,320 | 1,010 | 2,950 | 0,120 | 0,555 |
| 10 | 0,023 | 0,300 | 0,960 | 3,150 | 0,090 | 1,015 |

Tableau 1 (suite)

| n° | W | V | Cu | P+S | (Mo+W/2)+3 V | Re Mpa | Kv – 85°C (J) |
|----|----|----|----|----|----|----|----|
| 1 | tr | 0,003 | 0,250 | 9 | 0,279 | 575 | 205 |
| 2 | 0,115 | 0,024 | 0,150 | 8 | 0,291 | 570 | 135 |
| 3 | tr | 0,003 | 0,150 | 11 | 0,329 | 565 | 210 |
| 4 | tr | 0,001 | 0,180 | 9 | 0,323 | 545 | 230 |
| 5 | 0,240 | 0,002 | 0,250 | 7 | 0,336 | 560 | 225 |
| 6 | tr | 0,003 | 0,160 | 8 | 0,404 | 570 | 260 |
| 7 | tr | 0,001 | 0,180 | 7 | 0,473 | 570 | 260 |
| 8 | tr | 0,002 | 0,200 | 9 | 0,596 | 565 | 275 |
| 9 | 0,360 | 0,003 | 0,210 | 6 | 0,744 | 570 | 280 |
| 10 | tr | 0,002 | 0,210 | 8 | 1,021 | 570 | 295 |

Tableau 2

| n° | C | Si | Mn | Ni | Cr | Mo | W | V | Cu | (Mo+W/2) +3V | Re | Kv-85°C (J) |
|---|---|---|---|---|---|---|---|---|---|---|---|---|
| **6bis** | 0,050 | 0,120 | 0,920 | 3,300 | 0,095 | 0,400 | tr | 0,003 | 0,160 | 0,409 | 570 | 250 |
| **7bis** | 0,044 | 0,110 | 0,560 | 3,000 | 0,080 | 0,465 | tr | 0,002 | 0,210 | 0,471 | 580 | 275 |
| **8bis** | 0,036 | 0,120 | 0,980 | 3,250 | 0,095 | 0,600 | tr | 0,004 | 0,220 | 0,612 | 575 | 260 |
| **9bis** | 0,030 | 0,130 | 1,100 | 3,100 | 0,110 | 0,720 | tr | 0,003 | 0,200 | 0,729 | 570 | 280 |

Les exemples 1 à 9 illustrent l'effet combiné de la teneur en carbone et des éléments fortement carburigènes pour des teneurs habituelles en silicium. Les exemples 6bis, 7bis, 8bis et 9bis montrent l'effet particulier du silicium.

L'effet sur la soudabilité peut être évalué, notamment, par un essai par lequel on détermine la température minimale de préchauffage du joint soudé auto-bridé pour laquelle on ne voit pas apparaître de fissuration après soudage. Cet essai consiste à réaliser des cordons de soudure avec des températures de préchauffage de 150°, 125°, 100°, 75°, 50°, 25°, 5° et à observer les joints obtenus pour détecter la présence ou l'absence de fissures.

Les résultats de cette évaluation, correspondant aux exemples des tableaux 1 et 2, sont représentés sur la figure unique sur laquelle on voit une première courbe 1 qui représente l'évolution de la température minimale de non-fissuration en fonction de la teneur en éléments carburigènes forts pour une teneur en silicium de l'ordre de 0,3%.

On constate sur cette courbe que, lorsque la teneur en éléments carburigènes forts augmente et simultanément la teneur en carbone diminue, jusqu'à une teneur en éléments carburigènes forts de l'ordre de 0,6%, la température minimale de non-fissuration décroît. Au-delà de 0,6% environ, la température minimale de non-fissuration se remet à augmenter. Par un examen micrographique au droit des fissures des coulées 9 et 10 qui correspondent aux plus fortes teneurs en éléments carburigènes forts, on peut constater que les fissures apparaissent dans des zones ségrégées dont la dureté se révèle particulièrement élevée malgré une teneur en carbone relativement faible. Cette dureté élevée des zones ségrégées résulte probablement d'une co-ségrégation du carbone et des éléments carburigènes forts.

Au vu de cette courbe, il apparaît qu'on obtient un optimum de soudabilité pour des teneurs en éléments carburigènes forts comprises entre 0,4% et 0,65% environ.

La courbe 2, qui correspond à des aciers ayant des compositions comparables mais avec une teneur en silicium beaucoup plus faible que le cas précédent, montre que, lorsque la teneur en silicium baisse, la température minimale de non-fissuration est abaissée de 20°C à 25°C.

Cet effet du silicium peut être attribué à l'effet du silicium sur la conductibilité thermique. En effet, en abaissant le silicium qui dégrade de façon significative la conductibilité thermique de l'acier, on réduit les gradients de températures dans la zone affectée par la chaleur, ce qui a pour effet de réduire les contraintes.

Ceci peut être confirmé par des mesures de conductibilité thermique des coulées 6bis à 9bis et 6 à 9 qui leur sont comparables. De telles mesures permettraient de constater que la conductivité thermique des coulées 6bis et 9bis est supérieure d'environ 10% à celle des coulées 6 à 9.

Avec l'acier selon l'invention on peut réaliser des pièces de coques de sous-marins, par exemple des pièces découpées dans des tôles d'épaisseur comprise entre 40 et 60 mm, ou des pièces forgées telles que des pièces de raccordement dont les épaisseurs significatives peuvent atteindre 100 à 150 mm.

Avec ces pièces dont les caractéristiques ont été indiquées précédemment on peut réaliser des coques de sous-marins en assemblant ces pièces par soudage sur des chantiers à l'air libre, la température extérieure pouvait atteindre 0°C. Ces pièces peuvent être soudées de façon satisfaisante sans préchauffage, ou avec un préchauffage inférieur à 25°C.

Lorsque le procédé « électrode enrobée » habituellement préconisé pour les opérations de soudage considérées ici est utilisé, les précautions d'usage destinées à limiter la teneur en hydrogène introduit doivent autant que possible respectées, à savoir le stockage à sec et l'étuvage préalable des électrodes. Le type d'électrode utilisé peut correspondre, par exemple au type E55 2NiMo selon la norme EN 757.

Le procédé MIG fil plein qui, par nature, n'introduit pratiquement pas d'hydrogène, est à privilégier dans la mesure du possible en utilisant, par exemple, un fil de type G55 Mn4Ni2Mo selon la norme EN 12534.

Ces indications, relatives au procédé de soudage, ont ici valeurs de conseil non limitatif.

**Revendications**

1.   Utilisation d'un acier pour la fabrication de coques de sous-marins, comprenant des pièces en acier d'épaisseur comprises entre 15mm et 150mm assemblées par soudage, **caractérisée en ce que** la composition chimique de l'acier comprend, en % en poids :

$$0,030\% \le C < 0,080\%$$

$$0,040\% \le Si \le 0,48\%$$

$$0,1\% \le Mn \le 1,4\%$$

$$2\% \le Ni \le 4\%$$

$$Cr \le 0,3\%$$

$$0,30\% \le Mo + W/2 + 3 (V + Nb/2 + Ta/4) \le 0,89\%$$

$$Mo \ge 0,15\%$$

$$V + Nb/2 + Ta/4 \le 0,004\%$$

$$Nb \le 0,004\%$$

$$Cu \le 0,45\%$$

$$Al \le 0,1\%$$

$$Ti \le 0,04\%$$

$$N \le 0,0300\%$$

le reste étant du fer et des impuretés résultant de l'élaboration, le bore étant une impureté dont la teneur est inférieure à 0,0005%, et P + S $\le$ 0,015%, la composition chimique satisfaisant la condition

$$410 \le 540 \times C^{0,25} + 245 [ Mo + W/2 + 3 (V + Nb/2 + Ta/4)]^{0,30} \le 460$$

l'acier ayant une structure essentiellement martensitique, comprenant au moins 90% de martensite, au plus 5% d'austénite résiduelle, au plus 5% de ferrite, l'acier ayant une limite d'élasticité comprise entre 480 MPa et 620 MPa, et une ténacité Charpy V, $K_{cv}$, à -60°C, supérieure à 50 J.

2. Utilisation d'un acier selon la revendication 1, **caractérisée en ce que** :

$$Si \le 0,19\%$$

3. Utilisation d'un acier selon la revendication 1 ou la revendication 2, **caractérisée en ce que** :

$$Mn \leq 1\%$$

4. Utilisation d'un acier selon l'une quelconque des revendications 1 à 3, **caractérisée en ce que** :

$$W \geq 0,11\%$$

5. Utilisation d'un acier selon l'une quelconque des revendications 1 à 4, **caractérisée en ce que** :

$$2,5\% \leq Ni \leq 3,5\%$$

6. Utilisation d'un acier selon l'une quelconque des revendications 1 à 4, **caractérisée en ce que**

$$Cr \leq 0,15\%$$

7. Utilisation d'un acier selon la revendication 6, **caractérisée en ce que**

$$Cr \leq 0,09\%$$

8. Utilisation d'un acier selon l'une quelconque des revendications 1 à 7, **caractérisée en ce que** :

$$425 \leq 540 \times C^{0,25} + 245 \, [\, Mo + W/2 + 3 \, (V + Nb/2 + Ta/4)]^{0,30} \leq 450$$

9. Utilisation d'un acier selon l'une quelconque des revendications 1 à 8, **caractérisée en ce que** :

$$Ni \geq 2,7\%$$

10. Utilisation d'un acier selon l'une quelconque des revendications 1 à 9, **caractérisée en ce que** :

$$Mo \leq 0,75\%$$

11. Utilisation d'un acier selon l'une quelconque des revendications 1 à 10, **caractérisée en ce que** :

$$C \leq 0,055\%$$

12. Utilisation d'un acier selon la revendication 1, **caractérisée en ce que** :

$$0,030\% \leq C < 0,060\%$$

$$0,040\% \leq Si < 0,29\%$$

$$0,6\% \leq Mn < 1,2\%$$

$$2,5\% \leq Ni < 3,5\%$$

$$Cr \ < \ 0,15\%$$

$$0,40\% \leq \ Mo + W/2 + 3 \ (V + Nb/2 + Ta/4) \ < \ 0,59\%$$

$$Mo \ \geq \ 0,15\%$$

$$V + Nb/2 + Ta/4 \ \leq \ 0,004\%$$

$$Nb \ \leq \ 0,004\%$$

$$Cu \ < \ 0,25\%$$

$$Al \ < 0,04\%$$

Le titane étant absent ou à l'état de traces.

13. Utilisation d'un acier selon l'une quelconque des revendications 1 à 12, **caractérisée en ce que** les pièces sont assemblées par soudage sans préchauffage ou avec un préchauffage à une température inférieure ou égale à 25°C, y compris lorsque le soudage est effectué sur un chantier sur lequel la température extérieure est inférieure à 0°C.

14. Pièces de coque de sous-marin, d'épaisseur comprise entre 15 mm et 150 mm, en acier forgé ou laminé, trempé et revenu, obtenues par l'utilisation d'un acier, selon l'une quelconque des revendications 1 à 12.

15. Coque de sous-marin comprenant des pièces selon la revendication 14, assemblées par soudage.

16. Acier pour la fabrication de coques de sous-marins, **caractérisé en ce que** sa composition chimique est conforme à celle de l'acier utilisé selon l'une quelconque des revendications 1 à 12, et **en ce que** la teneur en silicium est inférieure ou égale à 0,19%, l'acier ayant une structure essentiellement martensitique, comprenant au moins 90% de martensite, au plus 5% d'austénite résiduelle, au plus 5% de ferrite, et l'acier ayant une limite d'élasticité comprise entre 480 MPa et 620 MPa, et une ténacité Charpy V, $K_{cv}$, à -60°C, supérieure à 50 J.

**Patentansprüche**

1. Verwendung eines Stahls für die Herstellung von Schiffsrümpfen von Unterseebooten, umfassend Stahlstücke mit einer Dicke zwischen 15 mm und 150 mm, die durch Schweißen zusammengesetzt sind, **dadurch gekennzeichnet, dass** die chemische Zusammensetzung des Stahls in Gewichts-% umfasst:

$$0,030 \ \% \leq C < 0,080 \ \%$$

$$0,040 \ \% \leq Si \leq 0,48 \ \%$$

$$0,1 \ \% \leq Mn \leq 1,4 \ \%$$

$$2 \ \% \leq Ni \leq 4 \ \%$$

$$Cr \leq 0,3\ \%$$

$$0,30\ \% \leq Mo + W/2 + 3\ (V + Nb/2 + Ta/4) \leq 0,89\ \%$$

$$Mo \geq 0,15\ \%$$

$$V + Nb/2 + Ta/4 \leq 0,004\ \%$$

$$Nb \leq 0,004\ \%$$

$$Cu \leq 0,45\ \%$$

$$Al \leq 0,1\ \%$$

$$Ti \leq 0,04\ \%$$

$$N \leq 0,0300\ \%,$$

wobei der Rest Eisen und Verunreinigungen sind, die durch die Bearbeitung hervorgerufen werden, wobei Bor eine Verunreinigung ist, deren Gehalt kleiner als 0,0005 % ist und P + S $\leq$ 0,015 % ist, wobei die chemische Zusammensetzung die Bedingung

$$410 \leq 540 \times C^{0,25} + 245\ [Mo + W/2 + 3(V + Nb/2 + Ta/4)]^{0,30} \leq 460$$

erfüllt, wobei der Stahl ein im Wesentlichen martensitisches Gefüge aufweist, das mindestens 90 % Martensit, maximal 5 % Restaustenit, maximal 5 % Ferrit umfasst, wobei der Stahl eine Elastizitätsgrenze zwischen 480 MPa und 620 MPa und eine Zähfestigkeit Charpy V, $K_{CV}$, bei -60°C größer als 50 J aufweist.

2. Verwendung eines Stahls nach Anspruch 1, **dadurch gekennzeichnet, dass**:

$$Si \leq 0,19\ \%.$$

3. Verwendung eines Stahls nach Anspruch 1 oder Anspruch 2, **dadurch gekennzeichnet, dass**:

$$Mn \leq 1\ \%.$$

4. Verwendung eines Stahls nach einem beliebigen der Ansprüche 1 bis 3, **dadurch gekennzeichnet, dass**:

$$W \geq 0,11\ \%.$$

5. Verwendung eines Stahls nach einem beliebigen der Ansprüche 1 bis 4, **dadurch gekennzeichnet, dass**:

$$2,5\ \% \le Ni \le 3,5\ \%.$$

**6.** Verwendung eines Stahls nach einem beliebigen der Ansprüche 1 bis 4, **dadurch gekennzeichnet, dass**:

$$Cr \le 0,15\ \%.$$

**7.** Verwendung eines Stahls nach Anspruch 6, **dadurch gekennzeichnet, dass**:

$$Cr \le 0,09\ \%.$$

**8.** Verwendung eines Stahls nach einem beliebigen der Ansprüche 1 bis 7, **dadurch gekennzeichnet, dass**:

$$425 \le 540 \ x \ C^{0,25} + 245 \ [Mo + W/2 + 3 \ (V + Nb/2 + Ta/4)]^{0,30} \le 450.$$

**9.** Verwendung eines Stahls nach einem beliebigen der Ansprüche 1 bis 8, **dadurch gekennzeichnet, dass**:

$$Ni \ge 2,7\ \%.$$

**10.** Verwendung eines Stahls nach einem beliebigen der Ansprüche 1 bis 9, **dadurch gekennzeichnet, dass**:

$$Mo \le 0,75\ \%.$$

**11.** Verwendung eines Stahls nach einem beliebigen der Ansprüche 1 bis 10, **dadurch gekennzeichnet, dass**:

$$C \le 0,055\ \%.$$

**12.** Verwendung eines Stahls nach Anspruch 1, **dadurch gekennzeichnet, dass**:

$$0,030\ \% \le C < 0,060\ \%$$

$$0,040\ \% \le Si < 0,29\ \%$$

$$0,6\ \% \le Mn < 1,2\ \%$$

$$2,5\ \% \le Ni < 3,5\ \%$$

$$Cr < 0,15\ \%$$

$$0,40\ \% \le Mo + W/2 + 3\ (V + Nb/2 + Ta/4) < 0,59\ \%$$

$$Mo \ge 0,15\ \%$$

$$V + Nb/2 + Ta/4 \leq 0,004\ \%$$

$$Nb \leq 0,004\ \%$$

$$Cu < 0,25\ \%$$

$$Al < 0,04\ \%,$$

wobei Titan nicht vorhanden ist oder in einem Zustand von Spuren vorhanden ist.

**13.** Verwendung eines Stahls nach einem beliebigen der Ansprüche 1 bis 12, **dadurch gekennzeichnet, dass** die Teile durch Schweißen ohne Vorheizen oder mit einem Vorheizen bei einer Temperatur kleiner oder gleich 25°C zusammengesetzt werden, wobei eingeschlossen ist, dass das Schweißen auf einer Werft durchgeführt wird, bei der die Außentemperatur kleiner als 0°C ist.

**14.** Teile eines Schiffsrumpfes eines Unterseebootes mit einer Dicke zwischen 15 mm und 150 mm aus geschmiedetem oder laminiertem, gehärtetem und vergütetem Stahl, die durch Verwendung eines Stahls nach einem beliebigen der Ansprüche 1 bis 12 erhalten werden.

**15.** Schiffsrumpf für ein Unterseeboot, Teile gemäß Anspruch 14 umfassend, die durch Schweißen zusammengesetzt sind.

**16.** Stahl für die Herstellung von Schiffsrümpfen für Unterseeboote, **dadurch gekennzeichnet, dass** die chemische Zusammensetzung derjenigen des Stahls entspricht, der nach einem beliebigen der Ansprüche 1 bis 12 verwendet wird, und dass der Gehalt an Silizium kleiner oder gleich 0,19 % ist, wobei der Stahl ein im Wesentlichen martensitisches Gefüge aufweist, das mindestens 90 % Martensit, maximal 5 % Restaustenit, maximal 5 % Ferrit umfasst, und wobei der Stahl eine Elastizitätsgrenze zwischen 480 MPa und 620 MPa und eine Zähfestigkeit Charpy V, $K_{CV}$, bei -60°C größer als 50 J aufweist.

**Claims**

**1.** Use of a steel to produce submarine hulls which comprising components having a thickness of between 15 mm and 150 mm assembled by means of welding, **characterised in that** the chemical composition of the steel comprises, in % by weight:

$$0.030\% \leq\ C < 0.080\%$$

$$0.040\% \leq\ Si\ \leq 0.48\%$$

$$0.1\% \leq\ Mn\ \leq 1.4\%$$

$$2\% \leq\ Ni\ \leq\ 4\%$$

$$Cr \leq\ 0.3\%$$

$$0.30\% \leq\ Mo + W/2 + 3\ (V + Nb/2 + Ta/4)\ \leq\ 0.89\%$$

$$Mo \geq 0.15\%$$

$$V + Nb/2 + Ta/4 \leq 0.004\%$$

$$Nb \leq 0.004\%$$

$$Cu \leq 0.45\%$$

$$Al \leq 0.1\%$$

$$Ti \leq 0.04\%$$

$$N \leq 0.0300\%$$

the balance being iron and impurities resulting from the elaboration, boron being an impurity whose content is less than 0.0005%, and $P + S \leq 0.015\%$, the chemical composition complying with the condition:

$$410 \leq 540 \times C^{0.25} + 245\,[\,Mo + W/2 + 3\,(V + Nb/2 + Ta/4)\,]^{0.30} \leq 460$$

the steel having a structure which is substantially martensitic, comprising at least 90% of martensite, at most 5% of residual austenite, at most 5% of ferrite, the steel having a yield strength comprised between 480 MPa and 620 MPa and a Charpy toughness V, $K_{cv}$ greater than 50 J at -60°C.

2. Use of a steel according to claim 1, **characterised in that**:

$$Si \leq 0.19\%.$$

3. Use of a steel according to claim 1 or claim 2, **characterised in that**:

$$Mn \leq 1\%.$$

4. Use of a steel according to any one of claims 1 to 3, **characterised in that**:

$$W \geq 0.11\%.$$

5. Use of a steel according to any one of claims 1 to 4, **characterised in that**:

$$2.5\% \leq Ni \leq 3.5\%.$$

6. Use of a steel according to any one of claims 1 to 4, **characterised in that**:

$$Cr \leq 0.15\%.$$

**7.** Use of a steel according to claim 6, **characterised in that**:

$$Cr \leq 0.09\%.$$

**8.** Use of a steel according to any one of claims 1 to 7, **characterised in that**:

$$425 \leq 540 \times C^{0.25} + 245\,[\,Mo + W/2 + 3\,(V + Nb/2 + Ta/4)\,]^{0.30} \leq 450.$$

**9.** Use of a steel according to any one of claims 1 to 8, **characterised in that**:

$$Ni \geq 2.7\%.$$

**10.** Use of a steel according to any one of claims 1 to 9, **characterised in that**:

$$Mo \leq 0.75\%.$$

**11.** Use of a steel according to any one of claims 1 to 10, **characterised in that**:

$$C \leq 0.055\%$$

**12.** Use of a steel according to claim 1, **characterised in that**:

$$0.030\% \leq C < 0.060\%$$

$$0.040\% \leq Si < 0.29\%$$

$$0.6\% \leq Mn < 1.2\%$$

$$2.5\% \leq Ni < 3.5\%$$

$$Cr < 0.15\%$$

$$0.40\% \leq Mo + W/2 + 3\,(V + Nb/2 + Ta/4) < 0.59\%$$

$$Mo \geq 0.15\%$$

$$V + Nb/2 + Ta/4 \leq 0.004\%$$

$$Nb \leq 0.004\%$$

$$Cu < 0.25\%$$

Al < 0.04%

Titanium being absent or present in trace levels.

13. Use of a steel according to any one of claims 1 to 12, **characterised in that** the components are assembled by means of welding with no preheating or with preheating to a temperature less than or equal to 25ºC, including when the welding is carried out on a site on which the outside temperature is less than 0ºC.

14. Submarine hull components, having a thickness of between 15 mm and 150 mm, of forged or rolled steel which has been quenched and tempered, obtained by using a steel according to any one of claims 1 to 12.

15. Submarine hull which comprises components according to claim 13, which are assembled by means of welding.

16. Steel for producing submarine hulls, **characterised in that** the chemical composition is according to the steel used according to any one of claims 1 to 12, and **in that** the silicium content is lower than or equal to 0.19%, the steel having a structure which is substantially martensitic, comprising at least 90% of martensite, a maximum of 5% of residual austenite, a maximum of 5% of ferrite, the steel having yield strength of between 480 MPa and 620 MPa and a Charpy toughness V, Kcv greater than 50 J at -60ºC.

Température (°C) mini de non-fissuration

Mo+W/2+3(V+Nb/2+Ta/4) (%)

**EP 1 885 900 B1**

## RÉFÉRENCES CITÉES DANS LA DESCRIPTION

**Documents brevets cités dans la description**

- WO 9324269 A